Europäisches Patentamt

European Patent Office

Office européen des brevets

(19)

(11) Veröffentlichungsnummer : **0 104 359**
**B1**

# EUROPÄISCHE PATENTSCHRIFT

(12)

(45) Veröffentlichungstag der Patentschrift :
02.01.86

(21) Anmeldenummer : 83107482.8

(22) Anmeldetag : 29.07.83

(51) Int. Cl.⁴ : **B 01 J 19/08**, B 01 J 19/14

(54) Verfahren und Vorrichtung zum Erzeugen heisser Gase.

(30) Priorität : 29.09.82 DE 3236037

(43) Veröffentlichungstag der Anmeldung :
04.04.84 Patentblatt 84/14

(45) Bekanntmachung des Hinweises auf die Patenterteilung : 02.01.86 Patentblatt 86/01

(84) Benannte Vertragsstaaten :
AT BE CH DE FR GB IT LI LU NL SE

(56) Entgegenhaltungen :
DE-B- 2 748 893
US-A- 3 042 830
ULLMANNS ENCYKLOPÄDIE DER TECHNISCHEN CHEMIE, 4. Aufl., Band 3, 1973, VERLAG CHEMIE, Weinheim/Bergstr. Seiten 540, 541, insbesondere Abb. 6A

(73) Patentinhaber : **HÜLS AKTIENGESELLSCHAFT**
**Patentabteilung/PB 15 - Postfach 13 20**
**D-4370 Marl 1 (DE)**

(72) Erfinder : **Schmidt, Herbert, Dr.**
**Uerdinger Strasse 8**
**D-4370 Marl (DE)**
Erfinder : **Müller, Richard, Dr.**
**Im Singelsen 24**
**D-4370 Marl (DE)**

EP 0 104 359 B1

## Beschreibung

Die Erfindung betrifft ein Verfahren und eine Vorrichtung zum Erzeugen heißer Gase mit Temperaturen oberhalb 1 600 K für die chemische und metallurgische Industrie.

Die Erfindung bezweckt, das Aufheizen und/oder die Herstellung der Gase mit beliebiger Zusammensetzung einschl. Gasgemischen in einem elektrischen Lichtbogenofen wirtschaftlich zu gestalten.

Die aufzuheizenden Gase können verschiedenartig zusammengesetzt sein ; sowohl Luft als auch Gasgemische aus Kohlenmonoxid (CO) und Wasserstoff ($H_2$) können vorgelegt werden. Neben CO und $H_2$ kann das Gasgemisch auch aus kohlenstoffhaltigen Komponenten bestehen, die mit einem in geeigneter Menge zugegebenen oxidierenden Medium wie z. B. $CO_2$, $H_2O$ bei den vorliegenden Temperaturen und Drucken reagieren, wobei ein Gasgemisch entsteht, das überwiegend CO und $H_2$ enthält. In diesem Falle wird ein Teil der dem Lichtbogen zugeführten Energie für die chemische Umsetzung verwendet.

Solche Gasgemische werden in der chemischen Industrie als Synthesegas für die Herstellung verschiedener organischer Stoffe verwendet. Bei der Metallherstellung aus Erzen dienen sie als Reduktionsgas.

Im klassischen Hochofenprozeß wird die Wärme zum Aufheizen im Hochofen selbst erzeugt und in den Winderhitzern vom Abgas an die vorzuheizende Luft abgegeben. Dabei erreicht man Temperaturen von 1 200 bis 1 500 K ; bei etwa 1 600 K liegt eine technische Grenze. Bei den neuerdings durchgeführten Direktreduktionsverfahren dagegen wird die Wärme zum Aufheizen im wesentlichen außerhalb des Reduktionsprozesses erzeugt und auf die Reduktionsgage übertragen. Nach diesem Verfahren lassen sich auch kleinere metallurgische Anlagen wirtschaftlich betreiben. Dabei kann der Einsatz von Lichtbogenöfen für die Herstellung und/oder Aufheizung der Reduktionsgase aus wirtschaftlichen Gründen zweckmäßig sein. Es lassen sich dabei Gastemperaturen bis zu 3 500 K bei Drucken bis zu 10 bar erreichen.

Das Aufheizen von Gasen mit oder ohne chemische Reaktionen im elektrischen Lichtbogenofen ist bekannt ; beispielsweise wird Acetylen aus Kohlenwasserstoffen großtechnisch im Lichtbogenofen hergestellt (Hydrocarb. Process., 1962 (6) 159 ff.). In der Metallverhüttungsindustrie werden Gasgemische aus CO und $H_2$ im Lichtbogenofen hergestellt und/oder aufgeheizt ; auch Luft kann im Lichtbogenofen aufgeheizt werden (DE-PS 24 13 580 = GB-PS 14 73 942). Hierfür werden unterschiedliche Lichtbogenanordnungen verwendet, wie z. B. gaswirbelstabilisierte Lichtbögen, magnetfeldstabilisierte Lichtbögen und Hochstromlichtbögen sowie Kombinationen dieser Anordnungen. Bei gaswirbelstabilisierten Lichtbögen können Kathode und/oder Anode stab- oder plattenförmig sein (US-PS 4 002 466). Der Nachteil dieses Verfahrens besteht darin, daß der Lichtbogenansatz zu stark fixiert wird, was zu niedrigen Standzeiten (50 bis 100 Stunden) der Elektrode — vor allem bei hohen elektrischen Leistungen — führt. Zudem läßt sich dieses Verfahren nur mit gasförmigen Kohlenwasserstoffen und bei Drucken unterhalb 1,5 bar (absolut) stabil betreiben.

Beim magnetfeldstabilisierten Lichtbogen bestehen die Elektroden, zumindest im Bereich des axialen Magnetfeldes, aus nicht-magnetisierbaren Metallen, z. B. Kupfer oder Stahllegierungen (DE-OS 21 07 824 = GB-PS 13 51 626). Der starke Abbrand dieser Elektroden kann erhebliche Kosten für die Elektroden und die Entfernung der Abbrandprodukte verursachen.

Deshalb haben sich für Lichtbogenöfen mit Leistungen oberhalb 6 MW die gaswirbelstabilisierten Lichtbögen mit abbrandarmen und billigen Elektroden durchgesetzt. Es besteht der Wunsch, diesen Lichtbogenofen auch für die Aufheizung und/oder Herstellung von Reduktions- und Synthesegasen sowie für das Aufheizen von Luft bei höheren Drucken einzusetzen.

Beim bekannten gaswirbelstabilisierten Hochspannungslichtbogenofen, wie er großtechnisch für die Acetylenherstellung eingesetzt wird, liegen die Ansatzpunkte des Lichtbogens auf großflächigen Elektroden ; dadurch entsteht ein nur geringer Abbrand, was Laufzeiten der Elektroden von 1 000 Stunden und mehr ergibt. Diese bekannte Lichtbogenanordnung läßt sich jedoch nur mit gasförmigen Kohlenwasserstoffen und bei Drucken unterhalb 1,5 bar (absolut) stabil betreiben. Veränderungen in der Zusammensetzung des Gasgemisches führen zu erheblichen Veränderungen der elektrischen Feldstärke in Längsrichtung, was sich auf die Bogenlänge und damit auf die für die Wirbelstabilisierung notwendige Gasmenge auswirkt. Bei Drucken oberhalb 1,5 bar (absolut) wird die zur Stabilisierung des Lichtbogens erforderliche Rotationsströmung des Gases erheblich verändert. Diese Einflußgrößen sind kritisch beim gaswirbelstabilisierten Hochspannungslichtbogen mit einem Verhältnis von Spannung zu Strom größer oder gleich 4 Volt/Ampere.

Damit stellt sich die Aufgabe, den mit Gleichstrom betriebenen gaswirbelstabilisierten Hochspannungslichtbogenofen entsprechend auszulegen und Verfahrensbedingungen zu ermitteln, damit dieser Ofen mit Luft, mit sauerstoffangereicherter Luft oder mit Gasgemischen aus CO, $H_2$ oder gasförmigen Kohlenwasserstoffen sowie mit $CO_2$ und/oder Wasserdampf bei Drucken oberhalb 1,5 bar (absolut) stabil betrieben werden kann.

Die Aufgabe wird durch das erfindungsgemäße Verfahren mit folgenden kennzeichnenden Merkmalen gelöst :

— der Impulsstrom des aufzuheizenden Gases beträgt mindestens 10 kg m/s², bevorzugt 10 bis 30 kg m/s² ;

— die Gasgeschwindigkeit beträgt mindestens 10 m/s, bevorzugt 10 bis 50 m/s beim Eintritt des Gases in die Wirbelkammer ;

— der Gasdruck beträgt 1,5 bis 10 bar (absolut), bevorzugt 2 bis 5 bar (absolut).

Das zu erhitzende Gas oder Gasgemisch wird in den Lichtbogenofen (s. Abbildung) tangential zur Elektrodenachse in den Raum eingeblasen, der zwischen den Elektroden (A = Anode, K = Kathode) liegt (G). Die umgesetzten und/oder erhitzten Gase werden — je nach ihrem Einsatzgebiet — dem Lichtbogenofen entweder durch eine der hohlen Elektroden — bevorzugt durch die hohle Anode — oder durch beide hohlen Elektroden gleichzeitig entnommen (GA). Die elektrisierte Spannung (E) legt man an der Kathode an.

Das erfindungsgemäße Verfahren wird durchgeführt mit einer Vorrichtung mit folgenden kennzeichnenden Merkmalen :

— bei den Hohlelektroden beträgt das Verhältnis der Innendurchmesser von Kathode (K) zu Anode (A) 1,6 bis 2,5 ;

— der Abstand zwischen den Elektroden (Spaltbreite (S) beträgt das 0,7- bis 0,9fache des inneren Kathodendurchmessers.

Der Impulsstrom ist das Produkt aus Massenstrom und Geschwindigkeit des Gases in den Einströmschlitzen des Wirbelringes (W) beim Eintritt in die Wirbelkammer.

Liegt der Impulsstrom der den Lichtbogen (L) umgebenden Wirbelströmung oberhalb 10 kg m/s$^2$ und ist gleichzeitig die Geschwindigkeit des durch die tangentialen Schlitze in die Wirbelkammer einströmenden Gasgemisches größer als 10 m/s, läßt sich der Lichtbogen bei den angegebenen Drucken sicher stabilisieren.

Bei erhöhtem Druck sinkt die für die Stabilisierung des Lichtbogens notwendige Gasmenge bei gleichzeitiger Erhöhung der elektrischen Feldstärke in Längsrichtung des Lichtbogens. Durch beide Effekte wird die Länge des Lichtbogens verkürzt und der Rückwirbel in die Hohlkathode abgeschwächt, dadurch wird der Bogenansatz auf der Kathode nicht mehr in die Hohlkathode hineingezogen, sondern der Lichtbogen brennt auf der Unterkante der Hohlkathode an einer festliegenden Stelle. Dieses führt zu einem sehr großen Abbrand und die Laufzeit der Kathode wird drastisch verkürzt auf 5 bis 10 Stunden.

Liegt das Verhältnis des Innendurchmessers der Kathode zu dem der Anode in den angegebenen Bereich, wird der Rückwirbel in die Hohlkathode auch bei erhöhtem Druck verstärkt und der Bogenansatz wird in die Hohlkathode hineingezogen.

Infolge axialer Schwingungen der Bogensäule reichen diese Maßnahmen für die stabile Lage des Bogenansatzes auf der Innenwand der Hohlkathode allein nicht aus, wenn der Abstand zwischen den Elektroden, also die Spaltbreite, zu groß ist. Liegt die vom Außendurchmesser der Hohlkathode abhängige Spaltbreite dagegen in dem angegebenen Bereich, befindet sich der Bogenansatz stabil auf der Innenwand der Hohlkathode.

Für eine große Standzeit beider Elektroden ist neben der Eindringtiefe des Lichtbogens in die Hohlkathode auch die Rotationsgeschwindigkeit der Bogenansatzpunkte auf beiden Elektroden maßgebend. Infolge der vergleichsweise kleineren Gasmenge bei erhöhtem Druck sinkt die Rotationsgeschwindigkeit der Gasströmung, die das Rotieren der Bodenansatzpunkte verursacht. Zu langsam rotierende Bogenansatzpunkte bewirken einen erhöhten Abbrand der Elektroden. Liegen jedoch der Impulsstrom und gleichzeitig die Eintrittsgeschwindigkeit des Gases oberhalb der angegebenen Mindestwerte, ergibt sich eine hinreichend große Rotationsgeschwindigkeit der Bogenansatzpunkte auf den Elektroden. Die Rotationsgeschwindigkeit ist optimal, wenn der Impulsstrom 10 bis 30 kg m/s$^2$ und die Eintrittsgeschwindigkeit des Gases 10 bis 50 m/s beträgt.

Um die oben genannten Maßnahmen voll wirksam werden zu lassen, ist es empfehlenswert, die Wirbelkammer mit Wirbelring und damit den Gaseinlaß in die Ebene zwischen den beiden Elektroden zu legen. Liegt die gaswirbelerzeugende Vorrichtung beispielsweise innerhalb einer oder beider Hohlelektroden, wird die Wirbelströmung gestört und der Lichtbogen weniger stabil.

Die Vorteile des erfindungsgemäßen Verfahrens, durchgeführt mittels der angegebenen Vorrichtung, sind :

— Der Lichtbogen brennt stabil mit innerhalb der Hohlelektroden liegenden Bogenansatzpunkten ;

— die Bogenansatzpunkte haben eine optimale Rotationsgeschwindigkeit ;

— der Abbrand der Elektroden ist klein und die Laufzeit der Elektroden ist groß ;

— der Gasdruck kann höher sein als bisher üblich ;

— die Zusammensetzung des Gases ist weitgehend beliebig, die Gase können keine oder nur geringe Anteile an Kohlenwasserstoffen enthalten.

Das erfindungsgemäße Verfahren, durchgeführt mittels der angegebenen Vorrichtung gestattet also, den gaswirbelstabilisierten Hochspannungslichtbogenofen mit seinen günstigen Eigenschaften für die Herstellung und/oder Erhitzung von Gasen weitgehend beliebiger Zusammensetzung bei erhöhten Drucken einzusetzen.

Das erfindungsgemäße Verfahren wird an folgendem Beispiel erläutert :

Ein in seinen wesentlichen Teilen bekannter gaswirbelstabilisierter, mit Gleichstrom betriebener Hochspannungslichtbogenofen, wie er für die Herstellung von Acetylen aus gasförmigen Kohlenwasserstoffen verwendet wird, wurde mit einem Gasgemisch folgender Zusammensetzung beschicht :

| CH₄ | 22 Vol.% |
|---|---|
| CO | 18 Vol.% |
| H₂ | 37 Vol.% |
| H₂O | 23 Vol.% |

CH$_4$ 22 Vol.%
CO 18 Vol.%
H$_2$ 37 Vol.%
H$_2$O 23 Vol.%

Folgende beiden Betriebsbedingungen des Lichtbogenofens wurden gewählt :

| | herkömmliche Bedingungen | erfindungsgemäße Bedingungen | |
|---|---|---|---|
| Ofenleistung | 8,5 | 8,5 | MW |
| Verhältnis von Ofenspannung zu Ofenstrom | 4,6 | 4,3 | V/A |
| Gasdruck im Ofen | 3 | 3 | bar (abs.) |
| Verhältnis der Innendurchmesser von Kathode zu Anode | 1 | 1,8 | |
| Verhältnis der Spaltbreite zum Innendurchmesser der Kathode | 1 | 0,85 | |
| Eintrittsgeschwindigkeit des Gasgemisches | 9 | 25 | m/s |
| Impulsstrom des Gasgemisches | 8 | 15 | kg m/s$^2$ |
| Lage der Wirbelkammer | in der Ebene zwischen den Elektroden | | |
| Entnahme des erhitzten Gases | durch die Hohlanode | | |
| Temperatur des Gases beim Austritt aus dem Ofen | max. 3 500 | max. 3 500 | ·K |
| Laufzeit der Kathode | 40 | 400 | h |
| Laufzeit der Anode | 90 | 950 | h |

4

0 104 359

Bei dem unter den erfindungsgemäßen Bedingungen betriebenen Lichtbogenofen ist bei dem hier eingesetzten Gasgemisch die Laufzeit der Elektroden also etwa 10 mal so groß wie bei dem unter herkömmlichen Bedingungen betriebenen Ofen.

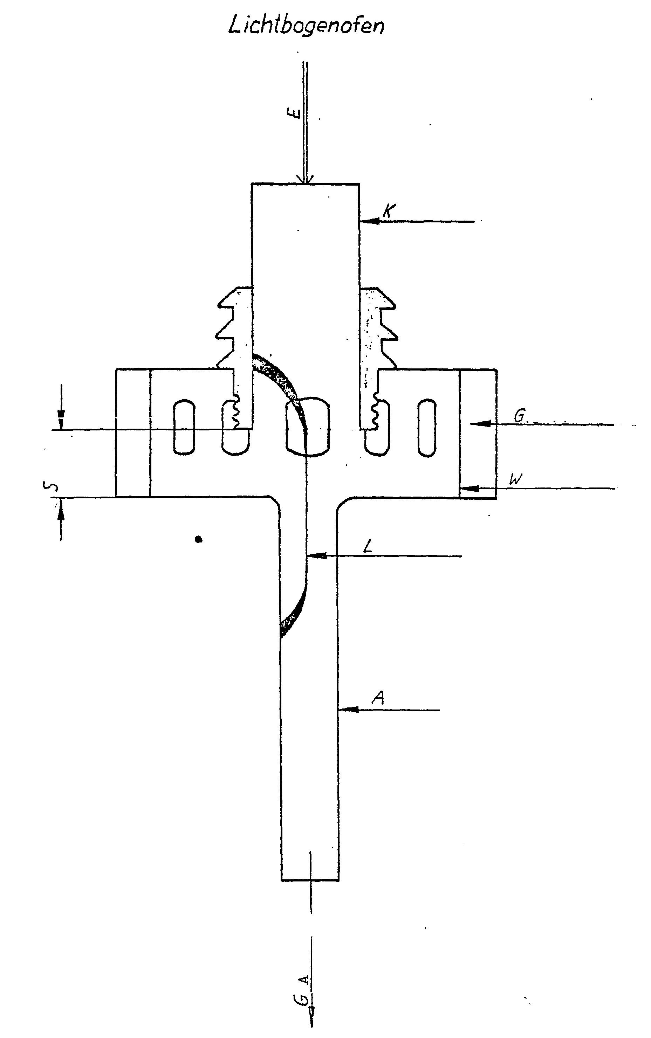

**Patentansprüche**

1. Verfahren zum Erzeugen von heißen Gasen wie Luft, mit Sauerstoff angereicherter Luft oder mit Gasgemischen aus CO, $H_2$ oder gasförmigen Kohlenwasserstoffen sowie mit $CO_2$ und/oder Wasserdampf bei Drucken oberhalb 1,5 bar (absolut), unter Benutzung des mit Gleichstrom betriebenen gaswirbelstabilisierten Hochspannungslichtbogenofens mit Hohlelektroden und Wirbelkammer, dadurch gekennzeichnet, daß man das Verfahren bei

— einem Impulsstrom des aufzuheizenden Gases von mindestens 10 kg m/s²,

— einer Gasgeschwindigkeit von mindestens 10 m/s beim Eintritt des Gases in die Wirbelkammer und

— bei Drucken von 1,5 bis 10 bar (absolut)

durchführt, wobei man bei den Hohlelektroden ein Verhältnis der Innendurchmesser von Kathode zu Anode von 1,6 bis 2,5 und einen Abstand zwischen den Elektroden, der das 0,9- bis 0,7fache des inneren Kathodendurchmessers beträgt, einhält und das zu erhitzende Gas tangential zur Elektrodenachse in den Lichtbogen einbläst.

2. Verfahren nach Anspruch 1, dadurch gekennzeichnet, daß der Impulsstrom des aufzuheizenden Gases 10 bis 30 kg m/s² beträgt.

3. Verfahren nach den Ansprüchen 1 und 2, dadurch gekennzeichnet, daß die Gasgeschwindigkeit 10 bis 50 m/s beträgt.

4. Verfahren nach den Ansprüchen 1 bis 3, dadurch gekennzeichnet, daß man das Verfahren bei einem Druck von 2 bis 5 bar (absolut) durchführt.

5. Verfahren nach den Ansprüchen 1 bis 4, dadurch gekennzeichnet, daß man das zu erhitzende Gas in den Lichtbogenofen tangential zur Elektrodenachse in den Raum, der zwischen den Elektroden liegt, einbläst.

6. Verfahren nach den Ansprüchen 1 bis 5, dadurch gekennzeichnet, daß man das erhitzte Gas durch eine der hohlen Elektroden aus dem Lichtbogenofen entnimmt.

7. Verfahren nach Anspruch 6, dadurch gekennzeichnet, daß man das erhitzte Gas durch die hohle Anode aus dem Lichtbogenofen entnimmt.

8. Verfahren nach den Ansprüchen 1 bis 5, dadurch gekennzeichnet, daß man das erhitzte Gas durch beide hohlen Elektroden aus dem Lichtbogenofen entnimmt.

9. Vorrichtung zum Erzeugen von heißen Gasen wie Luft, mit Sauerstoff angereicherter Luft oder mit Gasgemischen aus CO, $H_2$ oder gasförmigen Kohlenwasserstoffen sowie mit $CO_2$ und/oder Wasserdampf bei Drucken oberhalb 1,5 bar (absolut), unter Benutzung des mit Gleichstrom betriebenen gaswirbelstabilisierten Hochspannungslichtbogenofens mit Hohlelektroden und Wirbelkammer, gekennzeichnet durch

— Hohlelektroden, bei denen das Verhältnis der Innendurchmesser von Kathode (K) zu Anode (A) 1,6 bis 2,5 beträgt und

— einen Abstand zwischen den Elektroden (S), der das 0,9-bis 0,7 fache des inneren Kathodendurchmessers beträgt.

**Claims**

1. A process for generating a hot gas, such as air or air enriched with oxygen of with a gas mixture of CO, $H_2$ or a gaseous hydrocarbon and with $CO_2$ and/or steam under a pressure above 1.5 bar (absolute), using a gas vortex-stabilised high-voltage electric arc furnace operated with direct current and having hollow electrodes and a vortex chamber, characterised in that the process is carried out at

— a momentum flow of the gas which is to be heated up of at least 10 kg m/s²,

— a gas velocity of at least 10 m/s at the entry of the gas into the vortex chamber and

— under a pressure of 1.5 to 10 bar (absolute), a ratio of the internal diameters of the cathode and anode of 1.6 : 1 to 2.5 : 1 being maintained for the hollow electrodes, a distance being maintained between the electrodes which is 0.9 to 0.7 times the internal diameter of the cathode, and the gas which is to be heated being blown into the arc tangentially to the electrode axis.

2. A process according to claim 1, characterised in that the momentum flow of the gas which is to be heated up is 10 to 30 kg m/s².

3. A process according to claim 1 or 2, characterised in that the gas velocity is 10 to 50 m/s.

4. A process according to any of claims 1 to 3, characterised in that the process is carried out under a pressure of 2 to 5 bar (absolute).

5. A process according to any of claims 1 to 4, characterised in that the gas which is to be heated is blown into the arc furnace tangentially to the electrode axis into the space located between the electrodes.

5

6. A process according to any of claims 1 to 5, characterised in that the heated gas is withdrawn from the arc furnace through one of the hollow electrodes.

7. A process according to claim 6, characterised in that the heated gas is withdrawn from the arc furnace through the hollow anode.

8. A process according to claims 1 to 5, characterised in that the heated gas is withdrawn from the arc furnace through both hollow electrodes.

9. Equipment for generating a hot gas, such as air or air enriched with oxygen or with a gas mixture of CO, $H_2$ or a gaseous hydrocarbon and with $CO_2$ and/or steam under a pressure above 1.5 bar (absolute), using a gas vortex-stabilised high-voltage electric arc furnace operated with direct current and having hollow electrodes and a vortex chamber, characterised by
— hollow electrodes in which the ratio of the internal diameters of the cathode (K) and anode (A) is 1.6 : 1 to 2.5 : 1 and
— a distance between the electrodes (S) which is 0.9 to 0.7 times the internal diameter of the cathode.

**Revendications**

1. Procédé pour la production de gaz chauds comme l'air, l'air enrichi en oxygène ou des mélanges gazeux formés de CO, de $H_2$ ou d'hydrocarbures gazeux, ainsi que de $CO_2$ et/ou de vapeur d'eau, à des pressions (absolues) supérieures à 1,5 bar, avec utilisation du four à arc électrique à haute tension stabilisé par tourbillon de gaz, fonctionnant sur courant continu, avec électrodes creuses et chambre de tourbillonnement, caractérisé par le fait que l'on conduit le procédé
— avec un courant d'impulsion du gaz à chauffer d'au moins 10 kg.m/s$^2$,
— avec une vitesse de gaz d'au moins 10 m/s à l'entrée du gaz dans la chambre de tourbillonnement et
— à des pressions (absolues) de 1,5 à 10 bar,
en maintenant, dans le cas des électrodes creuses, un rapport du diamètre intérieur de la cathode à celui de l'anode de 1,6 à 2,5 et une distance entre les électrodes qui représente 0,9 à 0,7 fois le diamètre intérieur de la cathode et en injectant le gaz à chauffer dans l'arc électrique tangentiellement à l'axe des électrodes.

2. Procédé selon la revendication 1, caractérisé par le fait que le courant d'impulsion du gaz à chauffer est de 10 à 30 kg.m/s$^2$.

3. Procédé selon les revendications 1 et 2, caractérisé par le fait que la vitesse du gaz est de 10 à 50 m/s.

4. Procédé selon les revendications 1 à 3, caractérisé par le fait que l'on conduit le procédé à une pression (absolue) de 2 à 5 bar.

5. Procédé selon les revendications 1 à 4, caractérisé par le fait que l'on injecte le gaz à chauffer dans l'arc électrique, tangentiellement à l'axe des électrodes, dans l'espace qui se trouve entre les électrodes.

6. Procédé selon les revendications 1 à 5, caractérisé par le fait que l'on retire le gaz chauffé du four à arc électrique à travers l'une des électrodes creuses.

7. Procédé selon la revendication 6, caractérisé par le fait que l'on retire le gaz chauffé du four à arc électrique à travers l'anode creuse.

8. Procédé selon les revendications 1 à 5, caractérisé par le fait que l'on retire le gaz chauffé du four à arc électrique à travers les deux électrodes creuses.

9. Appareil pour la fabrication de gaz chauds comme l'air, l'air enrichi en oxygène ou des mélanges gazeux formés de CO, de $H_2$ ou d'hydrocarbures gazeux, ainsi que le $CO_2$ et/ou de vapeur d'eau, à des pressions (absolues) supérieures à 1,5 bar, avec utilisation du four à arc électrique à haute tension stabilisé par tourbillon de gaz, fonctionnant sur courant continu, avec électrodes creuses et chambre de tourbillonnement, caractérisé par
— des électrodes creuses dans lesquelles le rapport du diamètre intérieur de la cathode (K) à celui de l'anode (A) est de 1,6 à 2,5 et
— une distance (S) entre les électrodes qui représente de 0,9 à 0,7 fois le diamètre intérieur de la cathode.

0 104 359

*Lichtbogenofen*

1